# EUROPEAN PATENT SPECIFICATION

(11) **EP 4 164 778 B1**
(45) Date of publication and mention of the grant of the patent: **18.03.2026**
(21) Application number: 21742486.0
(22) Date of filing: 14.06.2021
(51) Int. Cl.: B01D 69/14, B01D 71/34, B01D 71/64, B01D 71/68, B01J 20/22, B01J 31/16, C07F 1/08, B01D 71/02

(54) **POLYMERIC MEMBRANE BASED ON POROUS METAL-ORGANIC FRAMEWORKS FOR THE DECONTAMINATION OF POLLUTED WATERS**
POLYMERMEMBRAN AUF BASIS PORÖSER METALLORGANISCHER GERÜSTE ZUR DEKONTAMINATION VON VERUNREINIGTEM WASSER
MEMBRANE POLYMÈRE À BASE DE STRUCTURES ORGANOMÉTALLIQUES POREUSES POUR LA DÉCONTAMINATION D'EAUX POLLUÉES

(30) Priority: 12.06.2020 IT 202000014074
(43) Date of publication of application: 19.04.2023
(73) Proprietor: Universita' Della Calabria, 87036 Rende (CS) (IT); Universitat de Valéncia, 46010 Valencia (ES)
(72) Inventor: MON CONEJERO, Marta, 46010 Valencia Valencia (ES); PARDO MARÍN, Emilio José, 46010 Valencia Valencia (ES); FERRANDO SORIA, Jesus, 46010 Valencia Valencia (ES); ARMENTANO, Donatella, 87040 Castrolibero (CS) (IT); BRUNO, Rosamaria, 87044 Cerisano (CS) (IT); TAGARELLI, Antonio, 87040 Marano Principato (CS) (IT); JANSEN, Johannes Carolus, 80746 Montalto Uffugo (CS) (IT)
(74) Representative: Cantaluppi, Stefano
(86) International application number: PCT/IB2021/055212
(87) International publication number: WO 2021/250639

(56) References cited:
- WO-A1-2015/095044
- WO-A1-2020/109638
- MON MARTA ET AL: "Selective and Efficient Removal of Mercury from Aqueous Media with the Highly Flexible Arms of a BioMOF", vol. 128, no. 37, 16 August 2016 (2016-08-16), DE, pages 11333 - 11338, XP055772496, ISSN: 0044-8249, Retrieved from the Internet <URL:https://api.wiley.com/onlinelibrary/tdm/v1/articles/10.1002%2Fange.201606015> [retrieved on 20210205], DOI: 10.1002/ange.201606015
- RANI LATA ET AL: "A critical review on recent developments in MOF adsorbents for the elimination of toxic heavy metals from aqueous solutions", ENVIRONMENTAL SCIENCE AND POLLUTION RESEARCH INTERNATIONAL, vol. 27, no. 36, 2016, pages 44771 - 44796, XP037304040, ISSN: 0944-1344, DOI: 10.1007/S11356-020-10738-8

## Description

### FIELD OF THE INVENTION

The present invention relates to the field of the decontamination of the waters from polluting metals, such as mercury and cadmium.

In particular, the present invention relates to the use of devices comprising porous metal-organic frameworks (MOFs) for the removal of contaminants from the waters.

### BACKGROUND OF THE INVENTION

The problem of the contamination of the waters by polluting substances, in particular by metals, is increasingly acute.

Among metals, mercury and cadmium pollution are of particular importance.

Mercury is a naturally occurring element in the environment, to which we are exposed either as a result of natural phenomena, e.g. forest fires or volcanic eruptions, or as a result of human activities.

The main sources of anthropogenic mercury pollution can include fossil coal combustion activities, industrial processes that result in the emission of mercury and compounds thereof, e.g. cement production and oil refining, the use of mercury-based dental amalgam in orthodontics, mercury mining and artisanal-scale gold mining involving the use of mercury.

Mercury has long been identified as a global contaminant with significant adverse effects on both human health and the environment.

Mercury can be present in the underground waters either due to natural causes or due to pollution.

According to the US Environmental Protection Agency (EPA), almost all mercury in uncontaminated potable water is believed to be in the form of Hg²⁺. Food is the main source of mercury in the populations of developing countries; the average dietary intake of mercury in various countries ranges from 2 to 20 µg/day per person. The US EPA has found that mercury in water has the potential to cause brain and kidney damage following short-term exposures at levels above the maximum contaminant level (MCL).

Synergistically, the US EPA and the World Health Organisation (WHO) have limited the regulatory standards for Hg²⁺ in potable water to MCL values = 0.002 mg/L (2 ppb) and 0.006 mg/L (6 ppb), respectively.

The spread of the knowledge on the dangerousness of mercury has led to the definition of both international and national regulations to limit and combat mercury pollution.

In Europe, with Regulation (EU) 2017/852 of the European Parliament, new and stricter rules have come into force for the safe storage and disposal of mercury.

Another contaminant of the waters of particular relevance is cadmium. The choice of cadmium as an additional metal ion under observation is due to the high degree of dangerousness it entails for human health.

Cadmium is released into the environment with effluents; a diffuse pollution is caused by the contamination with fertilisers and local air pollution. Cadmium has found extensive use in anti-corrosion coatings and Ni/Cd batteries. Some of it unfortunately ends up inexorably in the environment due to industrial discharges, through which it can reach and contaminate groundwaters. Legislative Decree 152/06 sets a limit value of 0.02 mg/L for Cadmium, both for the discharge in surface waters and for the discharge in the sewage system. Cadmium poisoning occurs when cadmium is absorbed through the skin, food or through the respiratory tract. It can interfere with insulin production and testosterone metabolism, causing diabetes, prostate problems and impotence. Cadmium replaces zinc in the arteries, making them less flexible and creating cardiovascular disorders such as hypertension. Tobacco smoke carries cadmium into the lungs: a packet of 20 cigarettes can lead to the inhalation of approximately 2-4 mg of cadmium. For non-smokers, the main route for exposure is through food. Foods rich in cadmium can increase the concentration of cadmium in the body, which is facilitated by the fact that cadmium is a very bio-persistent metal and can remain in the body for up to tens of years.

There is therefore a need for environmentally friendly methods and cost-effective and selective materials that can remove and recover the various contaminant species from the water.

This need is particularly felt in developing countries where the underground waters are commonly used for consumption.

In particular, there is a need for systems capable of decontaminating waters with a very low initial concentration of the contaminating mercury, but still above the maximum permitted contaminant level (MCL).

The methods currently used in water recycling include precipitation, coagulation/flocculation, membrane technology, biological processes, advanced oxidation and adsorption processes, such as activated carbons, zeolites, polymeric resins, bio-adsorbents and clays. These methods do not have great specificity, so several steps must be applied in sequence for the efficient removal of the contaminants that are harmful to the environment and the health of living beings, including ionic mercury.

Generally, such decontamination protocols are affected by high operational costs, in many cases they lead to the generation of secondary contaminants and, most importantly, they are rarely able to reduce the inorganic contaminants up to the limits allowed by the World Health Organization (WHO).

Adsorption is generally a very economical, convenient and easy operating technique. It exhibits high efficiency in removing metals and it is applied as a rapid method for all types of wastewater treatments. It is becoming a popular technique because in this process the adsorbent can be reused and the metal can be recovered for safe storage, thus reducing the risks to the environment and human health.

Several studies of membranes tested for Hg(ll) removal based on chitosan derivatives (1-3; 13-16) and other polymers have been reported, but the preparation methods and the efficiency thereof are not yet well established.

To solve the problem of decontaminating waters from very low initial contaminant concentrations, highly selective and very efficient adsorbents are needed to capture the target contaminant.

Adsorbent devices capable of regenerating even slightly polluted waters into potable waters are therefore sought.

Porous materials, known as Metal-Organic Frameworks (MOFs), have been studied for the removal of heavy metals (4-8). The MOFs as microcrystalline powders or pellets have been used for the adsorption of organic and inorganic contaminants.

A MOF with methionine residues used to remove mercury from polluted waters is described in the work by Mon et al. (7,9).

However, these materials can be thermally unstable, difficult to handle, and not very water resistant. In fact, the MOFs in water tend to dissociate easily, also as a function of pH, losing their ability to bind polluting molecules. The search for water-resistant MOFs is still of great interest today.

CN109317104, CN106391117, CN105295060, CN105294749 describe MOFs capable of binding mercury. In particular, CN109317104 describes an MOF with thiol groups for the absorption and the removal of mercury ions.

A further issue related to the use of pure MOFs, whether in powder or tablet form, is that their use for dynamic water purification, i.e. the purification of water flows, such as those in the pipes carrying water for consumption, requires a large packed bed, making them impractical for this type of application. This is why pure MOFs, whether in powder or tablet form, are generally only used for the static absorption of contaminants that are present in a limited and static amount of water.

To overcome this drawback, a device has now been found and tested for the removal of traces of contaminants such as Hg (II) and Cd (II) in which specifically functionalised MOFs are dispersed on a polymeric support of a membrane, thus producing a mixed matrix membrane.

Mixed matrix membranes, i.e. materials consisting of a polymeric matrix in which solid fillers are homogeneously dispersed, are known, for example, for gas separation.

CN109988326 describes a mixed matrix membrane containing a MOF in which the MOFs are used as fluorescent sensors for the detection of mercury ions.

Membrane devices comprising MOFs are known for the treatment of the waters, e.g. for the removal of organic dyes, but they are still difficult to use due to their performance which is not yet excellent in terms of efficiency and wide applicability (10,11).

The references (17-19) are also concerned with the use of MOFs in the treatment of solutions having heavy metals.

In particular, known devices of this type are not efficient enough to remove polluting substances in waters containing very low amounts of contaminant.

The need for devices capable of regenerating even very lightly polluted waters until they are potable is therefore still very much felt.

A device consisting of a mixed matrix membrane has now been found which, thanks to the chemical functionalisation of the porous material dispersed on the polymeric support, increases the adsorptive properties of the membrane device, both in terms of efficiency and selectivity, thus succeeding in regenerating even slightly polluted waters into potable waters.

Moreover, this device can also be advantageously used for microfiltration, i.e. for the treatment of water fluids and not only for static treatments, thanks to its membrane structure.

In particular, said device combines the high properties of capture of the polluting ions by the specific MOFs used with greater manageability and applicability provided by the polymeric membrane structure.

### SUMMARY OF THE INVENTION

Accordingly, a device comprising a mixed matrix membrane as defined in claim 1 is an object of the present invention.

The use of the term "residue" is well established in the field.

The term "residue" means a functional group with the chemical structure of the starting molecule.

In particular, the term "residue of methionine, of methylcysteine, of 2(S)-amino-4-methylmercaptopentanoic acid and of 2(S)-amino-4-methylmercaptoesanoic acid" means a functional group deriving respectively from methionine, or methionine group, methylcysteine, or methylcysteine group, 2(S)-amino-4-methylmercaptopentanoic acid and of 2(S)-amino-4-methylmercaptoesanoic acid.

A process using said device as defined in claim 10 for the decontamination of waters is also an object of the present invention. In particular, for the decontamination from mercury and/or cadmium.

The use of the device of the invention for the decontamination of polluted waters from mercury and/or cadmium.

In particular, the use of the device of the invention in plants for recycling water paths close to possible sources of pollution of the industry, of farms and of household use falls within the present invention, as does its use in the pipes carrying potable waters or in plants producing potable waters.

As shown in the formula (I) the present invention is characterised by the presence of porous hybrid materials dispersed on the polymeric matrix and functionalised with a thioether group, which is present in all meanings of Z. This conformation of the device significantly increases the selectivity and the strength of adsorbent-contaminant interactions, particularly adsorbent-mercury, making the mixed matrix membranes thus obtained unique for their selective adsorbing capacities.

In the devices according to the present invention, the contaminant, for example Hg(II), is chemically recognised and rapidly captured by the porous hybrid material incorporated as an absorbent in the support membrane.

The final device performs well in capturing the contaminant, e.g. ionic mercury, even when the latter is present in traces, by means of a microfiltration process while the contaminated water permeates through the membrane, bringing the water back to potable values.

The MOFs in the device according to the invention function as real adsorbents in the membrane. They contain the appropriate functional groups for the selective recognition and capture of the contaminant, e.g. Hg(II), at the surface and especially in the pores of the porous materials which are in turn blocked/supported by the pore walls of the polymeric membranes.

It was shown that Hg(II), as a target contaminant, is effectively and selectively adsorbed by the functional group present on the MOFs.

A high capture efficiency by the devices of the invention towards cadmium(II) present in contaminated waters was also demonstrated.

### Detailed description of the invention

### Figures

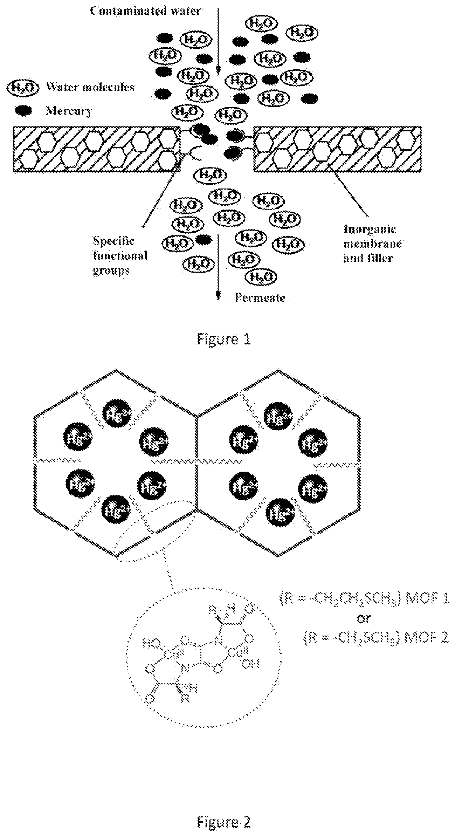

Figure 1. Schematisation of the filtration process in the case of a mixed matrix membrane in low-contaminant concentration regimes. Emphasis is placed on the interaction and the bond between the contaminant and the functional groups of the adsorbent species
Figure 2. Schematisation of the functional groups confined in the pores of the material and relative interactions with mercury in MOF 1 (not according to invention) and MOF 2.

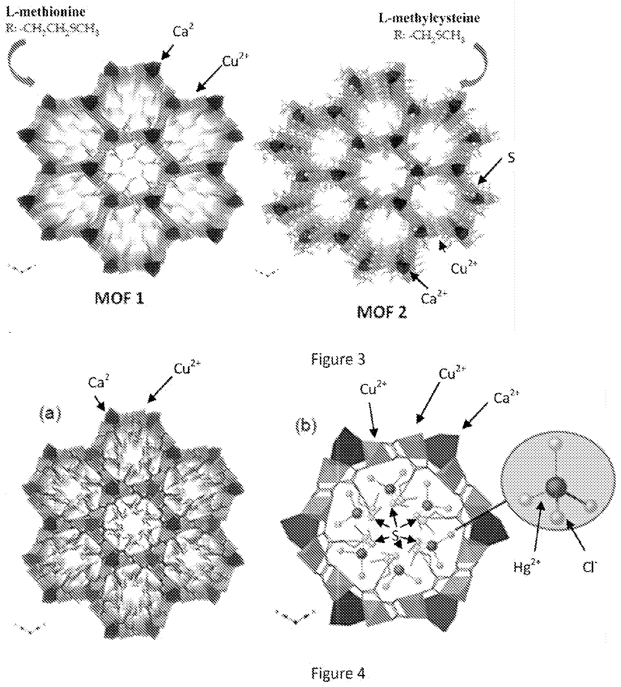

Figure 3. Perspective view of the section along the crystallographic c-axis of MOF 1 (a) and MOF 2 (b). The calcium and copper ions are represented by dark and light-coloured polyhedra respectively and specified with the chemical symbol shown. The sulphur atoms in the centre of the pore are highlighted and indicated by the chemical symbol. The remaining elements are represented as sticks. The water molecules in the pores have been omitted for clarity's sake.
Figure 4. Perspective view along the crystallographic c-axis of the porous structure of MOF 1 after adsorption of mercury chloride 3HgCl₂@MOF 1, structure obtained from diffraction data on single crystal. Section of the mercury-containing material in the pores (a) and detail of the single pore, in which the interactions by the sulphur atom of the functionalisation of MOF 1 (b) have been highlighted. The mercury and chlorine ions are indicated by their respective chemical symbols.

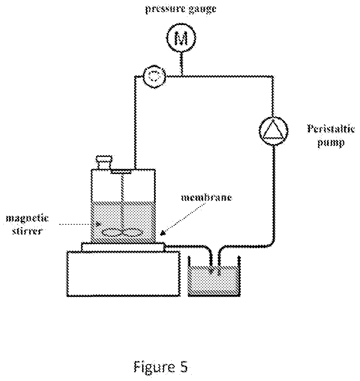

Figure 5. Schematisation of the process of microfiltration and recirculation of the solution

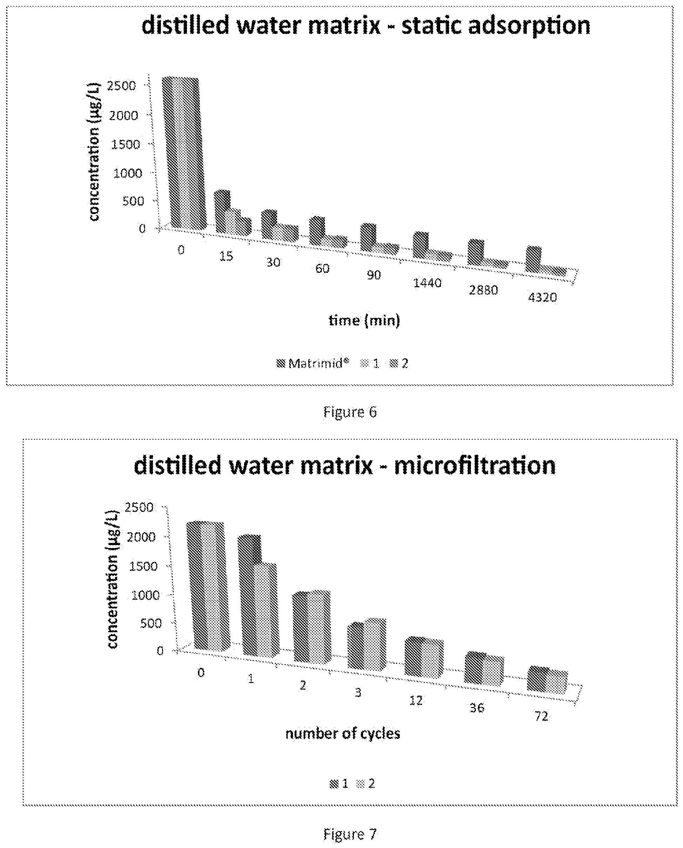

Figure 6. Abatement trend of mercury (II) concentration expressed in µg /L, as a function of the adsorption time. Data from ICP-MS analysis of residual Hg(ll) in distilled water contaminated in the laboratory with Hg²⁺ at an initial concentration of 2.61 mg/L, by static adsorption by action of the membranes 1 and 2, data on the treatment with a Matrimid^{®} polymer-only membrane are also presented for comparison.
Figure 7. Abatement trend of mercury (II) concentration, expressed in µg/L, as a function of the number of cycles of the microfiltration process. Data from ICP-MS analysis of residual Hg(ll) in distilled water prepared at an initial Hg²⁺ concentration equal to 2.21 mg/L, following microfiltration treatment with the membranes 1 and 2. The duration of a cycle for recirculation of 100 ml of solution is 40 minutes.

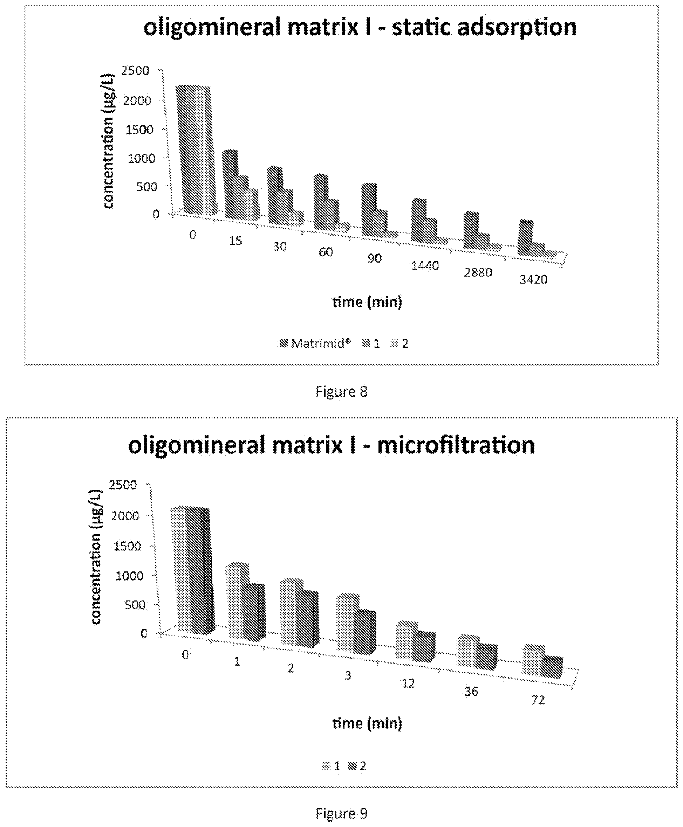

Figure 8. Abatement trend of mercury (II) concentration, expressed in µg/L, as a function of the number of cycles of the microfiltration process. Data from ICP-MS analysis of residual Hg(II), in oligomineral matrix contaminated with Hg²⁺ added to water with an initial concentration of 2.22 mg/L, after static adsorption of 1 and 2, data on the treatment with the polymer-only membrane are also presented for comparison.
Figure 9. Abatement trend of mercury (II) concentration, expressed in µg/L, as a function of the number of cycles of the microfiltration process. Data from ICP-MS analysis of residual Hg(ll) in distilled water contaminated with Hg²⁺ at an initial concentration equal to 2.09 mg/L, following microfiltration treatment with the membranes 1 and 2. The duration of a cycle for recirculation of 100 ml of solution is 40 minutes.

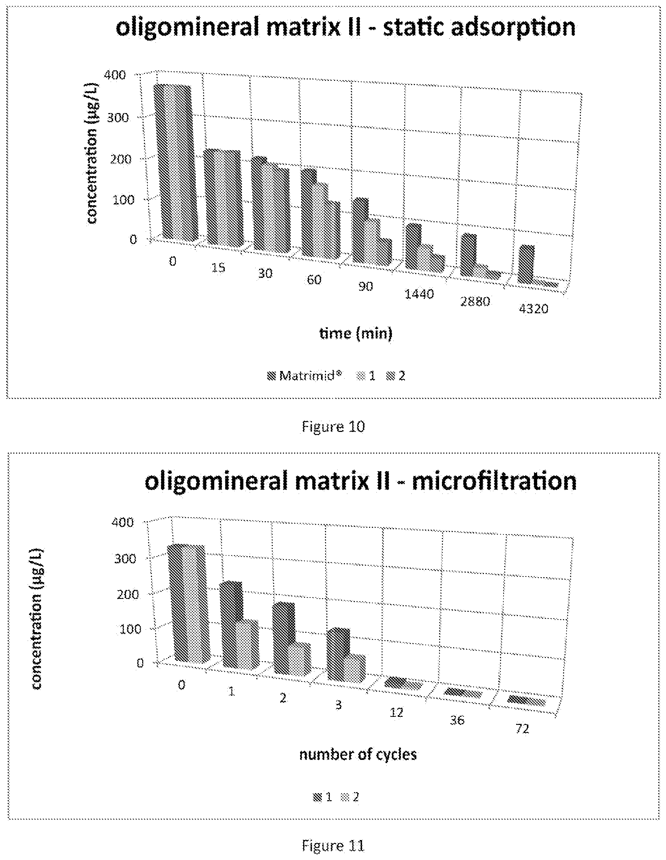

Figure 10. Abatement trend of mercury (II) concentration, expressed in µg/L, as a function of the number of cycles of the microfiltration process. Data from ICP-MS analysis of residual Hg(II), in oligomineral matrix contaminated with Hg²⁺ added to water with an initial concentration of 370 µg/L, after static adsorption of 1 and 2, data on the treatment with the polymer-only membrane are also presented for comparison.
Figure 11. Abatement trend of mercury (II) concentration, expressed in µg/L, as a function of the number of cycles of the microfiltration process. Data from ICP-MS analysis of residual Hg (II) in the oligomineral matrix II artificially contaminated with Hg²⁺ added to the water with an initial concentration equal to 330 µg/L, following microfiltration treatment with the membranes 1 and 2. The duration of a cycle for recirculation of 100 ml of solution is 40 minutes. The removal rate after 72 cycles reaches 99.5 % and 99.6 % for 1 and 2, respectively.

The present invention relates to the use of MOFs, i.e. advanced and intelligent porous materials, as adsorbents specifically functionalised and uniformly dispersed in the polymeric support of a membrane, whose performance in terms of efficiency, selectivity and maximum adsorption is appreciably improved.

A graphical representation of how the invention works is shown in Figure 1.

In the adsorption of the membranes object of the invention, the contaminant is chemically recognised and rapidly captured by the porous hybrid material incorporated as an adsorbent in the support membrane.

The present invention provides a robust, versatile and low-cost device for the efficient removal of the contaminant, e.g. mercury, even from waters in which it is dispersed in small amounts until the water is restored to potable levels.

In a particular embodiment, the invention enables the removal, in a very efficient manner, of toxic Hg(ll) from aqueous media, reducing the [Hg2+] concentration from the dangerous 3.7 ppm (mg/L) to acceptable limits for potable water, i.e. below 2 ppb (µg/L).

The simple large-scale preparation, the high stability and the low cost, synergistically linked to the efficient and rapid removal of polluting ions, make the device of the present invention a better absorbent for the purification of contaminated water than those of the state of the art.

An object of the present invention is therefore a device as defined above.

In one embodiment, said device consists of said mixed matrix membrane as defined above.

A polymeric membrane is defined as a polymeric film with or without internal and surface pores of controlled size, quantity and spatial distribution.

A mixed matrix membrane is a polymeric membrane in which particles, particularly microparticles, of another material are dispersed within the membrane.

In one embodiment, the mixed matrix membrane can be coated with a suitable protective polymer. Protective polymers useful for this purpose can be in particular polymers capable of preventing the MOF from escaping from the support but which are at the same time permeable to water. Examples of such protective polymers are perfluoropolymers, such as Hyflon^{®} AD, and polytetrafluoroethylenes, such as Teflon^{™} AF.

According to the present invention, the polymeric membrane consists of a polymer selected from a polyimide, and polyethersulfone. All these polymers are commercially available or can be synthesised according to known knowledge in the sector.

Preferably, it is a polyimide membrane.

In a preferred embodiment, said polymeric membrane is a polyimide matrix named Matrimid^{®} with a porous morphology. Said matrix is known and available on the market, for example it is supplied by Huntsman Corporation. Alternatively, it can be prepared according to what is known in the sector.

Any variant of Matrimid may be used in the present invention. In a preferred embodiment, Matrimid^{®}5218 is used. Matrimid 5218 is a polyimide based on diamine 5(6)-amino-1-(4' aminophenyl)-1,3,-trimethylindane.

According to the present invention, at least one organic metal material or MOF defined by formula (I) is dispersed in the polymeric membrane. In particular, a MOF of formula (I) is dispersed.

In a preferred embodiment, the MOF is present in the polymeric membrane in an amount ranging from 10 to 60% by weight. Preferably, said amount ranges from 20 to 50% by weight, even more preferably it is 30% or 23%.

A metal-organic framework or MOF refers to a crystalline material consisting of metal ions or clusters coordinated with rigid organic ligands to form three-dimensional structures with very high porosity.

The MOFs used in the membrane of the present invention are characterised by the formula (I) described above.

In said formula (I) X is preferably Ca^{II} and Y is preferably H₂O.

As evident from the possible meanings of Z, the MOF is characterised by the presence of a thioether group.

This thioether group, which thanks to the structure of the MOF extends in the MOF pore, has a high affinity for the polluting metals, such as mercury, and advantageously allows the capture thereof.

Depending on the meaning of Z, the MOF can then have one of the following formulas:
{X^{II}Cu^{II}₆[(S, S)-bis[(S)-methionine]oxalyl diamide]₃(OH)₂(Y)}. n H₂O; (not according to invention)
{X^{II}Cu^{II}₆[(S,S)-bis[(S)-methylcysteine]oxalyl diamide]₃(OH)₂(Y)}. n H₂O;
{X^{II}Cu^{II}₆[(S,S)-bis [2(S)-amino-4-methylmercaptopentanoic acid] oxalyl diamide]₃(OH)₂(Y)}. n H₂O; (not according to invention) or
{X^{II}Cu^{II}₆[(S,S)-bis[2(S)-amino-4-methylmercaptoesanoic acid]oxalyl diamide]₃(OH)₂(Y)}. n H₂O, (not according to invention)
wherein X, Y and n are as defined above.

In a preferred embodiment of the invention, the MOFs that take part in the device as fillers of the mixed matrix membrane are two MOFs derived from amino acids. They are also defined as bioMOFs because they are made from biological molecules, which make them particularly environmentally friendly. Both are functionalised by sulphur-containing amino acid residues.

In particular, as further described below, in one embodiment the MOF, herein named MOF1 (not according to invention) is functionalised with methionine. In another embodiment, the MOF, herein named MOF2, is functionalised with methylcysteine, as schematised in figure 2.

The MOF structure consists of copper (II) and calcium (II) centres (environmentally friendly metals) linked by organic ligands derived from the amino acid methionine or the methylation product of the cysteine, thus constituting an extended three-dimensional network, as schematically represented in figure 3. Alternatively, calcium can be replaced by barium (II) or strontium (II).

Figure 4 shows the crystal structures of the material in which the presence of adsorbed mercury is highlighted. In particular, it is shown that mercury is captured through binding with sulphur.

Advantageously, the MOFs used in the device of the invention are stable in a pH range comprised between 4 and 14. Therefore, they are resistant to the action of water.

Here described is a that comprises a MOF of formula {X^{II}Cu^{II}₆[(S,S)-bis[(S)-methionine]oxalyl diamide]₃(OH)₂(Y)}. n H₂O, wherein X, Y and n are as defined above. Said MOF is herein named methiomox or MOF1.

In this MOF, Z is a methionine residue.

In an embodiment according to the invention, said MOF has formula {Ca^{II}Cu^{II}ₑ[(S,S)-bis[(S)-methionine]oxalyl diamide]₃(OH)₂(H₂O)}. n H₂O.

In a preferred embodiment, in said MOF1 n is comprised between 10 and 30, preferably n is 16.

Said MOF1 is known and the synthesis thereof has been described in the work by M. Mon, J. Ferrando-Soria, T. Grancha, F. R. Fortea-Pérez, J. Gascon, A. Leyva-Pérez, D. Armentano, E. Pardo, J. Am. Chem. Soc. 2016, 138, 7864 (reference 9 in the bibliography section).

In an embodiment, the device according to the present invention comprises a MOF of formula {X^{II}Cu^{II}₆[(S,S)-bis[(S)- methylcysteine]oxalyl diamide]₃(OH)₂(Y)}. n H₂O, wherein X, Y and n are as defined above.

In this MOF, Z is a methylcysteine residue.

In a preferred embodiment, said MOF has formula {Ca^{II}Cu^{II}₆[(S,S)-bis[(S)-methylcysteine]oxalyl diamide]₃(OH)₂(H₂O)}. n H₂O. Said MOF is also herein named mecysmox or MOF2.

In a preferred embodiment, in said MOF2 n is comprised between 10 and 35, preferably n is 26.

MOF2 has proven to be particularly efficient in removing mercury from the contaminated waters, as evident from the accompanying examples.

The MOFs used in the present invention can be synthesised by various methods available to the expert in the sector of organic chemistry. General and illustrative methods for the preparation of the MOFs are reported below. These methods are illustrative and should not be understood as a limitation of the possible methods that the expert can use to prepare the MOFs. Different methods are evident to the expert as well as variations of the methods described herein. The reactions are carried out in a solvent or in solvent admixtures that are suitable for the reagents and the materials used and the reactions to be carried out. The expert can easily modify the reagents and the reaction conditions exemplified below to include any combination defined above of substituents. In addition, the expert may add further steps that he or she deems appropriate, such as isolation or purification. The starting and intermediate materials that are useful for preparing the MOFs are commercially available or can be prepared by means of well-known synthetic processes.

An example of the preparation of said MOF2, i.e. a MOF in which Z is a methylcysteine residue, is described below.

In a first step the proligand HMeEt-(S,S)-[bis[(S)-methylcysteine]oxalyl diamide] is prepared. The proligand is prepared using the following synthetic process:
- Stage 1: in a N₂ atmosphere, an excess of thionyl chloride, placed under stirring at 0° C on an ice bath is added dropwise to a solution of Amino Acid (S)-methyl-(L)-cysteine in MeOH in a 3:1 molar ratio. The resulting solution is placed under reflux, e.g. for 6 hours. The excess thionyl chloride is then distilled with MeOH. The reaction admixture is washed, e.g. with acetone and diethyl ether, and further concentrated under reduced pressure to produce the methyl ester derivative of the amino acid (S)-methyl-(L)-cysteine, which is used in the next step without further purification.
- Stage 2: the resulting methyl ester derivative of the amino acid (S)-methyl-(L)-cysteine is dissolved in dichloromethane and loaded with triethylamine in a 1:1 molar ratio. To the resulting reaction admixture, another solution containing oxalyl chloride in a molar ratio of 0.5:1 with respect to triethylamine is added dropwise in dichloromethane under vigorous stirring at 0°C on an ice bath. The resulting solution is further stirred, e.g. for two hours. The amount formed of solid (Et₃NHCl) is filtered and the resulting solution is then further concentrated, e.g. in a rotary evaporator. The solution is washed three times with water and finally the solvent is removed in a rotary evaporator to provide a solid, which is collected with water and dried under vacuum.

In a second step, the Cu(ll) dimeric complex is prepared, i.e (Me₄N)₂{Cu_{2[}(S,S)-bis[(S)-methylcysteine]oxalyl diamide](OH)₂} . 5H₂O. An aqueous suspension of H₂Me₂-(S,S)-bis[(S)-methylcysteine]oxalyl diamide is treated with a 25% methanolic solution of Me₄NOH in 1: 4 molar ratio, until completely dissolved. Another aqueous solution of CuCl₂, with ligand-metal 1: 2 molar ratio, is then added dropwise while the reaction admixture is stirred. The resulting solution is concentrated to a reduced volume in a rotary evaporator producing a polycrystalline solid, which is washed with filtered acetone and dried under vacuum.

Finally, the Metal-Organic Framework, i.e. the MOF of the formula {Ca^{II}Cu^{II}₆[(S,S)-bis[(S)-methylcysteine]oxalyl diamide]₃(OH)₂(H₂O)}. 16H₂O is prepared. The precursor (Me₄N)₂{Cu₂[(S,S)-bis[(S)-methylcysteine]oxalyl diamide](OH)₂} . 4H₂O is dissolved in water or methanol or admixture thereof. Then, another aqueous solution containing CaCl₂ prepared in a molar ratio of 3:1 with respect to the precursor is added dropwise under stirring. If X is barium or strontium, BaCl₂ or Sr(NO₃)₂ are added, respectively instead of CaCl₂. After further stirring, for example for 10 hours, at room temperature, a polycrystalline MOF powder is obtained, collected by filtration and dried with ethanol, acetone and diethyl ether.

Similarly, it is possible to prepare the MOFs wherein Z is a residue of 2(S)-amino-4-methylmercaptopentanoic acid or 2(S)-amino-4-methylmercaptoesanoic acid using 2(S)-amino-4-methylmercaptopentanoic acid or 2(S)-amino-4-methylmercaptoesanoic acid in stage 1 above instead of the amino acid (S)-methyl-(L)-cysteine. These acids can be synthesised using methods known in the sector.

Depending on the degree of humidity in the environment, MOFs can be obtained with different numbers of water molecules (n). For example, if the synthesis is carried out in a controlled humidity environment at 40% and a temperature of 20°C, an MOF with n equal to 16 is obtained.

The device according to the present invention can be prepared as described below.

A homogeneous solution of the polymer composing the polymeric membrane, e.g. a polyimide such as Matrimid^{®}, is prepared by dissolving a suitable percentage, e.g. 20%, of commercially available polymer powder, in a suitable solvent, e.g. dimethylacetamide (DMA), dimethylformamide (DMF), N-methylprirrolidone (NMP), dimethylsulfoxide (DMS), tetrahydrofuran (THF), e.g. under magnetic stirring at room temperature for 24 hours. The polycrystalline powder of the MOFs is initially desolvated (dried) at 80°C in a vacuum oven for a suitable time, e.g. 5 hours, and then suspended in a suitable solvent, e.g. DMA. A sonication typically lasting 30 minutes allows homogeneous suspensions of MOF to be obtained to which suitable grams of the polymeric solution have been added so as to achieve the desired final concentration, for example a final concentration between 10% and 60%, of MOF on the total polymer+MOF. The resulting solution is stirred for a suitable time, e.g. 24 hours, and then spread on a suitable support in order to obtain a suitable thickness of the solution, e.g. comprised between 50 µm and 1000 µm, preferably between 200 µm and 500 µm, for example 250 µm. The support may be any suitable support, in particular a nonwoven fabric. For example, the solution can be spread on a glass plate by means of a casting knife, such as Elcometer^{®}3570, with a thickness of ~250 µm. Finally, the polymeric solution spread on the support is immersed in a coagulation bath with suitable non-solvent, such as water or an admixture of water and the solvent of the polymer, or a solvent selected between methanol, ethanol and isopropanol or admixtures thereof with water, after exposition of the solution to the air for a suitable period between 10 seconds and 10 minutes, for example 1 minute. In an exemplary embodiment, the spread polymeric solution is obtained via non-solvent induced phase inversion (NIP), using distilled water as a non-solvent for the coagulation bath and using a delay before immersion of 1 minute. This delay favours obtaining a membrane with a characteristic morphology suitable for microfiltration, ultrafiltration or nanofiltration. The obtained membrane is washed in water and then in suitable organic solvents, such as methanol, ethanol or isopropanol, and allowed to dry to remove residual traces of solvent.

In one embodiment, the membrane is coated with a protective layer of a suitable polymer which allows to prevent the loss of the MOF from the membrane. Said coating polymer is preferably a commercially available perfluoropolymer, such as Hyflon^{®} AD60. Coating can be carried out using common methods in the sector, for example by immersion using a solution of Hyflon^{®} AD60 in HFE 7100 (hydrofluoroether) at 0.1% by weight.

A device comprising a mixed matrix membrane obtained through the process described above is also an object of the present invention.

In particular, a device obtained through the following steps:
a) desolvation of the powder of the metal-organic framework at 80° C placed under vacuum for a suitable time, e.g. 5 hours, and subsequent suspension in suitable solvent, e.g. DMA;
b) preparation of a homogeneous solution of the polymer composing the polymeric membrane, e.g. a polyimide such as Matrimid^{®}, by dissolving a suitable percentage, e.g. 20%, of polymer powder in a suitable solvent, such as dimethylacetamide (DMA), demethylformamide (DMF), N-methylprirrolidone (NMP), dimethylsulfoxide (DMS), tetrahydrofuran (THF), and placing under stirring, e.g. under magnetic stirring at room temperature for 24 hours;
c) addition to the solution obtained in step b) of the suspension obtained in step a) in a suitable amount to reach the desired final concentration, e.g. between 10% and 60%, of MOF on the total polymer+MOF;
d) sonication, typically 30 minutes;
e) agitation for a suitable time, e.g. 24 hours;
f) casting of the solution on an appropriate support with a suitable thickness, as defined above, e.g. ~ 250 µm on a glass plate;
g) immersion of the polymeric solution spread on the support in a coagulation bath with suitable non-solvent, as defined above, after exposition of the solution to the air for a suitable period between 10 seconds and 10 minutes, e.g. 1 minute.

An example of the operation of the device of the invention is described below.

The metal ions present in contaminated aqueous solutions can be captured by the device of the invention through physical and/or chemical adsorption.

The special functional groups cleverly placed on the inner surface of the MOFs provide significant interactions with the heavy metals, resulting in the absorbent separation of the heavy metals from water.

Adsorption is generally a very economical, convenient and easy operating technique. It exhibits high efficiency in removing metals and it is applied as a rapid method for all types of wastewater treatments. The adsorbent can be reused and the metal can be recovered for safe storage, which can reduce the risks to the environment and human health.

Without wishing to limit the invention in any way, it is considered that the device object of the present invention works mainly by chemical and/or electrostatic adsorption; physical adsorption is to be considered as an additional, improving but secondary effect. Specifically, two types of adsorption can be distinguished:
1. Chemical adsorption, which is also called activated adsorption: in the case of the present invention, activation is totally by the porous materials (MOF) used as filler of the polymeric membrane. The main steps synergistically involved in the adsorption of the polluting metal, e.g. mercury, on the solid adsorbent are:
   (a) Transport of the contaminant from the solution to the outer surface of the device. The internal mass transfer occurs by pore diffusion from the outer surface of the adsorbent to the inner surface of the porous structure, activated by the presence of the MOFs that are highly selective towards contaminant adsorption thanks to the presence of thioether groups that are very similar to the bond towards heavy metals, in particular Hg (II).
   (b) Adsorption of the contaminant in the active sites (MOF channels) of the adsorbent pores. The overall rate of adsorption is decided by the formation of the contaminant-MOF complex, e.g. Hg(II)-MOF, or by the diffusion within the particle, or both since the last step of adsorption is rapid compared to the remaining two steps.
2. Physical adsorption by the pores of the polymeric support thanks to the intrinsically porous nature of the support.

It has been shown that the mixed matrix membranes of the present invention are capable of capturing HgCl₂ from aqueous solution through the aforesaid chemical adsorption process as well as the physical addition very quickly and efficiently.

The great stability conferred by the confined space in the pores of the MOFs to the sulphur-complexed HgCl₂ species of the resulting amino acid residue, as observed in the crystal structure, makes these materials ideal candidates for efficiently performing selective capture of HgCl₂ from water. See for example in figure 4 a representation of complexed/captured mercury within the MOFs.

The present invention has the following advantages:
- extreme handling of the membrane devices. The microcrystalline powders of the materials to be recovered cannot be used as such in recycling plants due to their inherent handling difficulties and technical profile problems that could cause, for example low diffusion, poor mechanical stability and leaching. The integration of the materials into nanostructured membrane devices enables the transfer of the results observed on a laboratory scale to a pilot plant under real operating conditions;
- versatility in membrane size, easily adaptable to specific applications (tubular diameter, surface area, etc.);
- biocompatibility of the materials used: in particular, in the case in which chemical functionalisation is carried out by using two amino acids, methionine and methylcysteine, that is, the primary molecules of the proteins;
- unique ability to decontaminate even low-polluted waters until they are potable waters;
- The MOFs used here are stable in a pH range comprised between 4 and 14.
- Regeneration of the device which takes place under very mild conditions (washing with solvent) and on a short time scale;
- Affordable production, implementation and operation costs. The preparation of the polymeric membrane devices as well as the synthesis of the MOF materials is carried out at room temperature, mainly in water as a solvent, and its precursors are cheap and widely available from a commercial point of view. The nano-structuring process is a continuous and very energy-efficient production method. The operating costs of adsorption-based systems are the lowest among the technologies used in recycling protocols in water treatment plants (such as distillation, crystallisation, photocatalysis, coagulation/flocculation, oxidation and chemical/electrochemical precipitation). This is due to the fact that no energy/reagents are required for the elimination of the contaminants, and, moreover, as previously mentioned, the regeneration of the materials takes place in very mild experimental conditions (washing with solvent) and in a short time scale.

A process for the decontamination of waters that uses the device of the present invention is also an object of the present invention.

Decontamination means the removal of polluting elements from the waters. Water purification or recycling are used herein as synonyms.

Said polluting elements may be in particular heavy metals. Preferably, they are mercury or cadmium.

In a preferred embodiment, therefore, said process is for the decontamination from mercury and/or cadmium. Even more preferably, for the decontamination from ionic mercury (Hg²⁺).

In one embodiment, this process comprises the following steps:
a) contact between contaminated water and the device of the invention;
b) removal of the device from the water;
c) washing of the device with suitable solvent, for example 2-mercaptoethanol or dimethyl sulfide in admixture with water;
d) desorption of the contaminant bound to the device with suitable solvent, for example 2-mercaptoethanol or dimethyl sulfide in admixture with water for a suitable time, for example 24 hours;
e) optional storage of the contaminant.

In a particular embodiment the water to be decontaminated is a water flow. In this embodiment the process includes the following steps:
a) contact between the flow of contaminated water and the device of the invention;
b) optional repetition of the contact between water flow and device by collecting water and its subsequent passage from the device;
c) removal of the device from the water;
d) washing of the device with suitable solvent, for example 2-mercaptoethanol or dimethyl sulfide in admixture with water;
e) desorption of the contaminant bound to the device with suitable solvent, for example 2-mercaptoethanol or dimethyl sulfide in admixture with water for a suitable time, for example 24 hours;
f) optional storage of the contaminant.

Said water to be decontaminated is preferably water containing up to 1 ppm of Hg²⁺. In this embodiment the water is decontaminated as described above preferably up to a maximum value of 1.6 ppb. Said value is considered optimal for potable water because it is lower than the MCL value = 0.002 mg / L (2 ppb) allowed by the World Health Organisation (WHO) in potable waters.

In one embodiment, the device according to the present invention is used in a static application, i.e. in a volume of non-moving water. In this embodiment, the device can be kept in contact with water for suitable times in a purification tank.

In another embodiment, the device is used in a dynamic application, i.e. in a dynamic water flow. In this embodiment, the membrane acts by microfiltration, ultrafiltration or nanofiltration. In this embodiment, the device is placed in contact with a flow of moving water, with possible variation and control of the washing cycles. The water flow is preferably 0.2 mL min⁻¹ cm².

In one embodiment, several devices of the invention may be used in series.

In one embodiment, the two modes are used in sequence. Thus, in a first step the device is used in static mode and in a second step it is used in dynamic mode.

The use of the device of the invention for the decontamination of water also falls within the present invention.

It is preferred to use the devices of the invention for the purification of water flows, that is, of moving water.

In a preferred embodiment, they are used to decontaminate waters polluted by traces of mercury, i.e. with a low level of pollution until they are potable waters.

In one embodiment, the devices of the invention are used in recycling plants for waterways close to possible polluting sources of the industry, such as for example in the pharmaceutical industry, textile industry, food industry, polyurethane production, artisanal-scale gold mining, farms and household use.

In a preferred embodiment, they are advantageously used upstream of pipes forming part of potable water systems for greater control and safety over the quality of the waters distributed to the households.

The invention will be further illustrated by the following examples.

### Examples

In the following examples, examples with MOF1 are not according to the invention.

### Example 1

### Decontamination efficiency of MOF2

### Materials and methods

Preparation of HMeEt-(S,S)-[bis[(S)-methylcystein]oxalyl diamide]: The proligand was prepared using the following synthetic process:
- Stage 1: under a N₂ atmosphere, an excess of thionyl chloride (13.10 mL, 180 mmol), placed under stirring at 0° C on an ice bath was added dropwise to a solution of the amino acid (S)-methyl-(L)-cysteine (8.11 g, 60 mmol) in 150 mL of MeOH. The resulting solution was placed under reflux for 6 hours. The excess thionyl chloride was then distilled with MeOH (3 x 150 mL). The reaction admixture was washed with acetone (150 ml) and diethyl ether (100 ml) and further concentrated, under reduced pressure, to produce the methyl ester derivative of the amino acid (S)-methyl-(L)-cysteine, which was used in the next step without further purification.
- Stage 2: The resulting methyl ester derivative of the amino acid (S)-methyl-(L)-cysteine (8.95 g, 60 mmol) was dissolved in dichloromethane and loaded with triethylamine (8.4 mL, 60 mmol). To the resulting colourless reaction admixture, another solution containing oxalyl chloride (2.54 mL, 30.0 mmol) in dichloromethane (150 mL) was added dropwise under vigorous stirring at 0°C on an ice bath. The resulting solution was further stirred for two hours. The small amount formed of white solid (Et₃NHCl) was filtered and the resulting solution was then further concentrated in a rotary evaporator to a final volume of 100 ml. The pale yellow solution was washed three times with water (3x50 ml) and finally the solvent was removed in a rotary evaporator to provide a white solid, which was collected with water and dried under vacuum. Yield: 9.62 g, 91%; Calc. analysis (%) for C₁₂H₂₀S₂N₂O₆ (352.4): C 40.98, H 5.72, S 18.20, N 7.95; found: C 40.97, H 5.68, S 18.26, N 7.99; ¹H NMR ([D₆]DMSO): 2.20 (s, 6H; SCH₃), 2.97 (m, 2H; CH₂), 3.17 (m, 2H; CH₂), 3.62 (s, 6H; OCH₃), 4.78 (t, 2H; CH), 9.01 (d, 2H; NH from CONH). IR (KBr): v = 1763, 1751and 1656 cm⁻¹ (C=O).

Preparation of (Me₄N)₂{Cu₂[(S,S)-bis[(S)-methylcysteine]oxalyl diamide](OH)₂} . 5H₂O: An aqueous suspension (60 mL) of H₂Me₂-(S,S)-bis[(S)-methylcysteine]oxalyl diamide (10.572 g, 30 mmol) was treated with a 25% methanolic solution of Me₄NOH (36 mL, 125 mmol) until completely dissolved. Another aqueous solution (25 ml) of CuCl₂ (8.07 g, 60 mmol) was then added dropwise while the reaction admixture was stirred. The resulting green solution was concentrated to a volume of about 5-10 ml in a rotary evaporator producing a green polycrystalline solid, which was washed gently with filtered acetone and dried under vacuum. Yield: 14.77 g, 68%; Calc. analysis for C₁₈H₄₈Cu₂S₂N₄O₁₃ (719.8): C, 30.03; H, 6.72; S, 8.91; N, 7.78%. Found: C, 30.13; H, 6.63; S, 8.93; N, 7.75%. IR (KBr): *v* = 3621 cm⁻¹ (O-H), 3023, 2964 cm⁻¹ (C-H), 1608 cm⁻¹ (C=O).

Preparation of {Ca^{II}Cu^{II}₆[(S,S)-bis[(S)-methylcysteine]oxalyl diamide]₃(OH)₂(H₂O)}. 16H₂O: The precursor (Me₄N)₂{Cu₂[(S,S)-bis[(S)-methylcysteine]oxalyl diamide](OH)₂} . 4H₂O (4.32 g, 6.0 mmol) was dissolved in 50 ml of water. Then, another aqueous solution (10 ml) containing CaCl₂ (0.22 g, 2.0 mmol) was added dropwise under stirring. After further stirring for 10 hours at room temperature, a green polycrystalline powder was obtained, collected by filtration and dried with ethanol, acetone and diethyl ether. Yield: 2.91 g, 83%; Calc. analysis for C₃₀CuₑCaH₇₂S₆N₆O₃₇ (1722.7): C, 20.92; H, 4.21; S, 11.17; N, 4.88%. Found: C, 20.91; H, 4.17; S, 11.19; N, 4.93%. IR (KBr): v= 1602 cm⁻¹ (C=O).

### Results

In order to confirm the performance of the methylcysteine-derived MOF, the decontamination efficiency of the synthesised sample of MOF 2 was evaluated and compared to the previously described removal efficiency of MOF 1.

Therefore, we evaluated the capture and selectivity properties of MOF2 by immersing 10 mg of a polycrystalline MOF sample in an aqueous solution containing 10 ppm of highly toxic cations Hg²⁺ and also other common ions found in potable water such as Na⁺, K⁺, Ca²⁺, Mg²⁺, HCO³⁻, Cl⁻, NO³- and SO₄²⁻ The capture process was monitored by ICP-MS and HPLC analysis, measuring the decrease in ion concentration at different time intervals (0-4320 min).

Under these static conditions, there is a very efficient and selective capture of Hg2+ cations from the water for MOF 2. In fact, it is able to reduce [Hg²⁺] from 10 ppm to 4.6 ppb, quite close to the acceptable limits for potable water.

The acquisition process has a much faster kinetics than the previously reported results for MOF 1 (7) which is in perfect agreement with the higher accessible pore size characteristic of the MOF 2 (figure 3, right).

Furthermore, an experiment was carried out by means of very accurate crystallographic methods which restored the crystalline structure of the MOF2. The structure of the MOF2 even after successful capture unequivocally highlights the nature of the interaction between S and Hg (II) and the position occupied by Hg (II) when it enters (after capture) the pores of the MOF.

### Example 2

### Mercury capture experiment (II)

### Materials and methods

### Preparation of mixed matrix membranes.

After activation of MOF 1 and MOF 2, having placed them in an oven at 80°C for 5 hours, a suspension in DMA (dimethylacetamide) consisting of 0.3 g of MOF and 2 g of the solvent is prepared. It is subjected to ultrasounds for 30 minutes and 5 g of the polymeric solution of Matrimid^{®} 5218 at 20% are added, allowing under stirring for 24 hours. This is followed by the realization of the actual membrane by non-solvent induced phase inversion (NIPs).

A perfectly smooth and clean glass surface is the basis for laying the membrane. Using the suitable casting blade (ECLOMETER 3560), which allows a thickness of 250 microns to be modulated, the solution is extended, which after the coagulation will give rise to the flat membrane. From the moment the solution is cast on the glass, it is waited for one minute before immersing it with the support in the coagulation bath. This delay favours an improvement in the morphology and in surface layer of the membrane. The non-solvent used in the coagulation bath is water. After washing in ethanol, the membrane is allowed to dry in order to carry out the dip-coating process. After preparing a 0.1 % solution of Hyflon^{®} AD60 in HFE 7100 (hydrofluoroether), a portion of the membrane is immersed therein, from which a section of flat circular membrane with a radius of 2.35 cm to be subjected to testing will be subsequently obtained.

In order to discuss and compare the performance of the mixed matrix membranes, a so-called blank, a polymer-only membrane, was made by adding 2 g DMA to 5 g of 20% Matrimid^{®}5218 polymeric solution and repeating the same steps as when making the mixed matrix membranes. The 20 % Matrimid^{®}5218 polymeric solution was previously prepared by placing 6 grams polymer in 24 g DMA and allowing it under stirring at room temperature for 24 hours.

The metal adsorption process was monitored by ICP-MS analysis of the decrease of metal salts within the treated waters at specific time intervals and at different initial concentrations.

Static and dynamic adsorption experiments were performed on circular sections of porous flat membranes with an area of 17.34 cm² (effective area to be considered for the dynamic/microfiltration experiment 13.8 cm²).

In the case of static adsorption, the three different types of membranes were placed in contact with 10 ml of a solution of known concentration of mercury chloride and samples were taken for kinetic monitoring as shown in Table 3.

The stabilisation of mercury in solution, in view to ICP-MS analysis, was carried out by addition of concentrated nitric acid.

During the microfiltration process, represented in figure 5, the mixed matrix membranes were placed in contact with a solution containing mercury chloride at a known concentration, recirculating 100 ml volume in the Millipore UF Solvent-resistant Stirred Cell 47 mm XFUF04701. A peristaltic pump Masterflex L/S Economy Variable-Speed Drive, 20 to 600 rpm, 115 VAC was used to recirculate the solution.

Samples were taken for a total number of 72 cycles. The stabilisation of mercury in view of the ICP-MS characterisation was carried out by adding nitric acid.

### Results

Firstly, the capture of mercury (II) in distilled water was verified.

In addition, in order to mimic the real conditions of polluted matrices, two further experiments were carried out in an oligomineral matrix contaminated with different mercury concentrations: 2.2 ppm of HgCl₂ and 330 ppb.

The experiment at higher concentration (oligomineral matrix I) is aimed at demonstrating the efficiency of the device, while lowering the amount of contaminant (oligomineral matrix II), it was shown that due to the strong affinity of the MOFs for mercury, the device is not only effective but also sensitive towards capturing small amounts (traces) of mercury(II).

Commercial mineral water with a defined chemical composition was used, as shown in Table 1 below.

**Table 1 Chemical composition of the tested mineral water expressed in (mg L⁻¹).**

| | |
|---|---|
| Sodium | 1.5 |
| Bicarbonate | 10 |
| Fluoride | <0.10 |
| Calcium | 2.9 |
| Nitrate | 0.81 |

The experimental results from ICP-MS analysis for mercury (II) capture during the static adsorption and microfiltration process are shown in the following Tables 2-6.

**Table 2. Percentage of mercury (II) removal in the static adsorption and microfiltration process. LOD= Limit of detection**

| *static adsorption* | | | | | | | | | | | | | | | |
|---|---|---|---|---|---|---|---|---|---|---|---|---|---|---|---|
| time min | **distilled water** | | | | | **oligomineral matrix I** | | | | | **oligomineral matrix II** | | | | |
| | Matrimid^{®} | | 1 | 2 | | Matrimid^{®} | | 1 | | 2 | Matrimid^{®} | | 1 | | 2 |
| 15 | 72.6 | | 84.6 | 90.0 | | 47.3 | | 66.7 | | 76.6 | 39.0 | | 39.1 | | 38.7 |
| 30 | 82.5 | | 91.3 | 91.8 | | 57.2 | | 73.9 | | 89.7 | 41.3 | | 44.7 | | 47.6 |
| 60 | 83.5 | | 95.2 | 94.7 | | 59.5 | | 77.9 | | 94.6 | 46.4 | | 54.5 | | 65.3 |
| 90 | 84.3 | | 96.1 | 95.6 | | 62.6 | | 81.8 | | 97.3 | 61.3 | | 73.5 | | 85.2 |
| 1440 | 85.7 | | 96.2 | 96.7 | | 70.2 | | 84.0 | | 97.5 | 73.8 | | 85.8 | | 91.3 |
| 2880 | 86.5 | | 97.6 | 98.0 | | 75.8 | | 90.5 | | 97.7 | 76.4 | | 94.3 | | 97.3 |
| 4320 | 86.7 | | 98.0 | 98.2 | | 77.5 | | 92.8 | | 98.2 | 79.5 | | 99.5 | | <LOD |

| *microfiltration* | | | | | | | | | | | | | | | |
|---|---|---|---|---|---|---|---|---|---|---|---|---|---|---|---|
| *time (min)* | | *number of cycles* | **distilled water** | | | | **oligomineral matrix I** | | | | | **oligomineral matrix II** | | | |
| | | | 1 | | 2 | | 1 | | 2 | | | 1 | | 2 | |
| 40 | | 1 | 44.7 | | 59.7 | | 41.6 | | 57.4 | | | 28.6 | | 60.3 | |
| 80 | | 2 | 52.9 | | 61.0 | | 50.2 | | 58.9 | | | 42.4 | | 75.3 | |
| 120 | | 3 | 59.9 | | 70.8 | | 57.7 | | 69.1 | | | 59.7 | | 80.4 | |
| 480 | | 12 | 75.9 | | 82.0 | | 74.6 | | 81.0 | | | 96.0 | | 98.1 | |
| 1440 | | 36 | 80.7 | | 86.0 | | 79.6 | | 85.2 | | | 99.3 | | 99.4 | |
| 2880 | | 72 | 82.8 | | 89.2 | | 81.8 | | 88.6 | | | 99.5 | | 99.6 | |

The results are also represented in figures 6 and 7.

**Table 3. Data from ICP-MS analysis of mercury (II) in distilled water following the static adsorption and microfiltration processes by membranes 1 and 2, furthermore, the data of the Matrimid^{®} polymer-only membrane for static adsorption are also presented for comparison.**

| *distilled water matrix concentration in (µg*/*L)* | | | | | | |
|---|---|---|---|---|---|---|
| *static adsorption* | | | | *microfiltration* | | |
| time min | Matrimid^{®} | 1 | 2 | number of cycles | 1 | 2 |
| 0 | 2610 | 2610 | 2610 | 0 | 2207 | 2207 |
| 15 | 716 | 403 | 262 | 1 | 2030 | 1576 |
| *30* | 457 | 226 | 225 | 2 | 1137 | 1186 |
| 60 | 430 | 125 | 138 | 3 | 701 | 802 |
| 90 | 411 | 103 | 114 | 12 | 560 | 550 |
| *1440* | 369 | 98 | 87 | 36 | 420 | 390 |
| *2880* | 352 | 63 | 52 | 72 | 302 | 275 |
| *4320* | 348 | 52.8 | 47.5 | | | |

The results are also represented in figures 8 and 9.

**Table 4. Data obtained from ICP-MS analysis of mercury (II) in the oligomineral matrix I following the static adsorption and microfiltration processes by membranes 1 and 2, furthermore, the data of the Matrimid^{®} polymer-only membrane for static adsorption are also presented for comparison.**

| *oligomineral water I matrix concentration in (µg*/*L)* | | | | | | |
|---|---|---|---|---|---|---|
| *static* adsorp*tion* | | | | *microfiltration* | | |
| time min | Matrimid^{®} | 1 | 2 | number of cycles | 1 | 2 |
| 0 | 2220 | 2220 | 2220 | 0 | 2090 | 2090 |
| 15 | 1170 | 740 | 520 | 1 | 1220 | 890 |
| *30* | 950 | 580 | 228 | 2 | 1040 | 860 |
| 60 | 900 | 490 | 120 | 3 | 885 | 645 |
| 90 | 830 | 405 | 60.2 | 12 | 531 | 398 |
| *1440* | 662 | 355 | 55.9 | 36 | 427 | 310 |
| *2880* | 538 | 210 | 50.8 | 72 | 380 | 238 |
| *4320* | 500 | 160 | 40.9 | | | |

The results are also represented in figures 10 and 11.

**Table 5. Data obtained from ICP-MS analysis of mercury (II) in the oligomineral matrix II following the static adsorption and microfiltration processes by membranes 1 and 2, furthermore, the data of the Matrimid^{®} polymer-only membrane for static adsorption are also presented for comparison.**

| *oligomineral water II matrix concentration in (µg*/*L)* | | | | | | |
|---|---|---|---|---|---|---|
| *static adsorption* | | | | *microfiltration* | | |
| time min | Matrimid^{®} | 1 | 2 | number of cycles | 1 | 2 |
| 0 | 373 | 373 | 373 | 0 | 330 | 330 |
| 15 | 227 | 227.25 | 228 | 1 | 236 | 131 |
| *30* | 219 | 206.4 | 195 | 2 | 190 | 81.5 |
| 60 | 200 | 169.85 | 129 | 3 | 133 | 64.6 |
| 90 | 144 | 98.95 | 55.3 | 12 | 13.15 | 6.22 |
| *1440* | 97.8 | 52.8 | 32.5 | 36 | 2.33 | 1.89 |
| *2880* | 88.1 | 21.4 | 10.1 | 72 | 1.78 | 1.26 |
| *4320* | 76.6 | 1.85 | < LOD | | | |

**Table 6. Adsorption capacity per unit volume expressed in µg/cm³ of each membrane in the case of static adsorption and microfiltration.**

| *static adsorption (µg*/*cm³)* | | | |
|---|---|---|---|
| *membrane* | **distilled water** | **oligomineral matrix I** | **oligomineral matrix II** |
| Matrimid^{®} | 133.6 | 107.8 | 20.1 |
| **1** | 141.1 | 118.8 | 21.4 |
| **2** | 141.4 | 125.1 | 21.5 |

| *dynamic adsorption-microfiltration (µg*/*cm³)* | | | |
|---|---|---|---|
| *membrane* | **distilled water** | **oligomineral matrix I** | **oligomineral matrix II** |
| **1** | 109.7 | 98.6 | 18.9 |
| **2** | 111.4 | 106.8 | 19.0 |

These analyses indicated that only the mercury salt is absorbed by the membranes, showing significant selectivity, due to the high affinity of the sulphur atoms for mercury.

The different efficiency of the membranes 1 and 2 in the regeneration of contaminated waters is shown in the tables reported above and in the graphs in figures 6-11, and highlights the greater efficiency of the membrane 2 (prepared by dispersing MOF2 with methylcysteine), probably due to its larger pore size.

The experiment that shows the operation of the invention was carried out at two different concentrations of HgCl₂ in order to evaluate in even greater detail the adsorptive and selective capacities of the membranes 1 and 2.

The removal efficiency was followed by decreasing the concentration of the mercury salt within the solution after treatment, at specific time intervals both dynamically (Graphs of figures 7, 9 and 11, Tables 3-5) and statically (Graphs in figures 6, 8 and 10, Tables 3-5), then draining the contaminated water through the membranes, which presupposes the capture through chemical adsorption as well as after very short contact times with the membrane surface, of about 1 second, or by allowing the membranes immersed in the solution (static experiment).

Overall, these results place the membrane 2 (MOF2 with methylcysteine) among the best performing devices in mercury removal as only very few reported compounds are able to reduce [HgCl₂] so quickly and dramatically and none of them are known to have dynamic adsorptive capabilities.

The reasons for this unique behaviour can be found in the stable conformation adopted by the mercury centre, which resembles the conformation of the mercury-reductase enzyme, within the suitable confined space provided by the MOF pore and the particular stability of the activating filler dispersed in the polymeric matrix. A membrane made in this way is easy to handle, as it is very easy to vary its size and consequently its adsorption capacity depending on the application.

This strategy moves somewhat in a different direction than other porous systems with large channels, which also allow the capture of high amounts of mercury but with less efficiency and versatility.

In fact, 1 and 2 are the first examples of mixed matrix membranes with the above-mentioned mercury (II) capture characteristics.

The stability of the membranes was also tested in terms of regeneration.

In this respect, Hg²⁺ was extracted after suspension of the membranes in 2-mercaptoethanol for 24 hours. The integrity and reusability of 1 and 2 after the extraction process were evaluated in three successive cycles of adsorption and regeneration, which confirms the still significant stability and efficiency (Tables 7-8) recovering up to 87.7 and 89.1% of Hg²⁺ for 1 and 2 respectively.

The stability and regeneration of the membranes are key factors for their exploitation in industrial applications and economic viability. The high performance of these membranes in terms of stability and regeneration also make them suitable for future large-scale studies and candidates for rapid application for the removal of mercury from contaminated water.

**Table 7. Removal of Hg²⁺ (µg L⁻¹) of 1 and 2 and pure Matrimid^{®} after three regeneration cycles by static adsorption and microfiltration of Hg²⁺ in oligo mineral water with initial contaminant concentration of 361 ppb (for static experiment) or 300 ppb, respectively.**

| *Static absorption* | | | | *Microfiltration* | | |
|---|---|---|---|---|---|---|
| Time (min) | **Matrimid^{®}** | **1** | **2** | Number of cycles | **1** | **2** |
| 0 | 361 | 361 | 361 | 300 | 300 | 300 |
| 15 | 268.7 | 231 | 230.37 | 1 | 248.4 | 234.2 |
| 30 | 239.95 | 228.8 | 182.48 | 2 | 187.9 | 176.1 |
| 60 | 187.1 | 155.5 | 135.41 | 3 | 141.2 | 84.3 |
| 90 | 151.2 | 104.95 | 101.7 | 12 | 135 | 61.74 |
| 1440 | 110.8 | 77.2 | 69.5 | 36 | 82.4 | 54.02 |
| 2880 | 95.8 | 45.4 | 43.1 | 72 | 40.7 | 35.89 |
| 4320 | 66.6 | 37 | 29.7 | | | |

**Table 8. Removal of Hg²⁺ (%) of 1 and 2 and pure Matrimid^{®} after three regeneration cycles by static adsorption and microfiltration of Hg²⁺.**

| *Static absorption* | | | | *Microfiltration* | | |
|---|---|---|---|---|---|---|
| Time (min) | **Oligo water** | | | Number of cycles | **Oligo water** | |
| | **Matrimid^{®}** | **1** | **2** | | **1** | **2** |
| 15 | 28.0 | 38.1 | 38.2 | 1 | 24.7 | 29.0 |
| 30 | 35.7 | 38.7 | 51.1 | 2 | 43.1 | 46.6 |
| 60 | 49.8 | 58.3 | 63.7 | 3 | 57.2 | 74.5 |
| 90 | 59.5 | 71.9 | 72.7 | 12 | 59.1 | 81.3 |
| 1440 | 70.3 | 79.3 | 81.4 | 36 | 75.0 | 83.6 |
| 2880 | 74.3 | 87.8 | 88.4 | 72 | 87.7 | 89.1 |
| 4320 | 82.1 | 90.1 | 92.0 | | | |

### References

(1) Saber-Samandari, S.; Gazi, M. Removal of Mercury (II) from Aqueous Solution Using Chitosan-Graft-Polyacrylamide Semi-IPN Hydrogels. Sep. Sci. Technol. 2013, 48 (9), 1382-1390. https://doi.org/10.1080/01496395.2012.729121.
(2) Noah D. Meeks, Erica Davis, Mohit Jain, Ganesh Skandan, and D. B. Mercury Removal by Thiol-Functionalized Metal Oxide-Carbon Black Sorbent and Mixed-Matrix Membranes. Environ. Prog. Sustain. Energy 2013, 32 (3), 705.
(3) Khulbe, K. C.; Matsuura, T. Removal of Heavy Metals and Pollutants by Membrane Adsorption Techniques. Appl. Water Sci. 2018, 8 (1), 1-30. https://doi.org/10.1007/s13201-018-0661-6.
(4) Mon, M.; Bruno, R.; Ferrando-Soria, J.; Armentano, D.; Pardo, E. Metal-Organic Framework Technologies for Water Remediation: Towards a Sustainable Ecosystem. J. Mater. Chem. A 2018, 00, 1-36. https://doi.org/10.1039/C8TA00264A.
(5) Peng, Y.; Huang, H.; Zhang, Y.; Kang, C.; Chen, S.; Song, L.; Liu, D.; Zhong, C. A Versatile MOF-Based Trap for Heavy Metal Ion Capture and Dispersion. Nat. Commun. 2018, 9 (1). https://doi.org/10.1038/s41467-017-02600-2.
(6) Efome, J. E.; Rana, D.; Matsuura, T.; Lan, C. Q. Metal-Organic Frameworks Supported on Nanofibers to Remove Heavy Metals. J. Mater. Chem. A 2018, 6 (10), 4550-4555. https://doi.org/10.1039/c7ta10428f.
(7) Mon, M.; Lloret, F.; Ferrando-Soria, J.; Marti-Gastaldo, C.; Armentano, D.; Pardo, E. Selective and Efficient Removal of Mercury from Aqueous Media with the Highly Flexible Arms of a BioMOF. Angew. Chemie Int. Ed. 2016, 55 (37), 11167-11172. https://doi.org/10.1002/anie.201606015.
(8) Mon, M.; Qu, X.; Ferrando-Soria, J.; Pellicer-Carreno, I.; Sepulveda-Escribano, A.; Ramos-Fernandez, E. V; Jansen, J. C.; Armentano, D.; Pardo, E. Fine-Tuning of the Confined Space in Microporous Metal-Organic Frameworks for Efficient Mercury Removal. J. Mater. Chem. A 2017, 5 (38), 20120-20125. https://doi.org/10.1039/C7TA06199D.
(9) Mon, M.; Ferrando-Soria, J.; Grancha, T.; Fortea-Pérez, F. R.; Gascon, J.; Leyva-Pérez, A.; Armentano, D.; Pardo, E. Selective Gold Recovery and Catalysis in a Highly Flexible Methionine-Decorated Metal-Organic Framework. J. Am. Chem. Soc. 2016, 138 (25). https://doi.org/10.1021/jacs.6b04635.
(10) Elrasheedy, A.; Nady, N.; Bassyouni, M.; El-Shazly, A. Metal Organic Framework Based Polymer Mixed Matrix Membranes: Review on Applications in Water Purification. Membranes (Basel). 2019, 9 (7). https://doi.org/10.3390/membranes9070088.
(11) Li, J.; Wang, H.; Yuan, X.; Zhang, J.; Chew, J. W. Metal-Organic Framework Membranes for Wastewater Treatment and Water Regeneration. Coord. Chem. Rev. 2020, 404, 213116. https://doi.org/10.1016/j.ccr.2019.213116.
(12) World Health Organisation. Guidelines for Drinking-Water Quality, Fourth Edition; 2011.
(13) M. Urgun-Demirtas, P.L. Benda, P.S. Gillenwater, M.C. Negri, H. Xiong, S.W. Snyder, Achieving very low mercury levels in refinery wastewater by membrane filtration., J. Hazard. Mater. 215-216 (2012) 98-107. doi:10.1016/j.jhazmat.2012.02.040.
(14) A. Oehmen, D. Vergel, J. Fradinho, M.A.M. Reis, J.G. Crespo, S. Velizarov, Mercury removal from water streams through the ion exchange membrane bioreactor concept., J. Hazard. Mater. 264 (2014) 65-70. doi:10.1016/j.jhazmat.2013.10.067.
(15) M. SHAMSIPUR, O. HASHEMI, V. LIPPOLIS, A supported liquid membrane system for simultaneous separation of silver(I) and mercury(II) from dilute feed solutions, J. Membr. Sci. 282 (2006) 322-327. doi:10.1016/j.memsci.2006.05.034.
(16) S. Sangtumrong, P. Ramakul, C. Satayaprasert, U. Pancharoen, A.W. Lothongkum, Purely separation of mixture of mercury and arsenic via hollow fiber supported liquid membrane, J. Ind. Eng. Chem. 13 (2007) 751-756. http://www.scopus.com/inward/record.url?eid=2-s2.0-
(17) RANI LATA ET AL: "A critical review on recent developments in MOF adsorbents for the elimination of toxic heavy metals from aqueous solutions",ENVIRONMENTAL SCIENCE AND POLLUTION RESEARCH INTERNATIONAL, vol. 27, no. 36, 2016, pages 44771-44796, ISSN: 0944-1344, DOI: 10.1007/S11356-020-10738-8
(18) WO 2015/095044 A1 (SABIC GLOBAL TECHNOLOGIES BV [NL]; SHAO LEI [SA] ET AL.) 25 June 2015 (2015-06-25)
(19) WO 2020/109638 A1 (UNIV VALENCIA [ES]; UNIV DELLA CALABRIA [IT]) 4 June 2020 (2020-06-04)

## Claims

1. A device comprising a mixed matrix membrane wherein said mixed matrix membrane is a polymeric membrane in which at least one metal-organic framework (MOF) having the following formula (I) is dispersed:
{X^{II}Cu^{II}₆[(S,S)-bis[(S)-methylcysteine]oxalyl diamide]₃(OH)₂(Y)}. n H₂O;
wherein X is selected from Ca", Ba^{II} and Sr^{II},
Y is selected between H₂O and CH₃OH,
and n is comprised between 0 and 35,
and wherein the polymer of said polymeric membrane is selected from polyimide, polyethersulfone.

2. The device according to claim 1 wherein said polymeric membrane is a polyimide membrane, in particular the membrane named Matrimid^{®}.

3. The device according to anyone of the preceding claims wherein X is Ca^{II} and Y is H₂O.

4. The device according to anyone of claims 1-3 wherein said metal-organic framework has formula {Ca^{II}Cu^{II}₆[(S,S)-bis[(S)-methylcysteine]oxalyl diamide]₃(OH)₂(H₂O)}. n H₂O, wherein n is comprised between 0 and 35.

5. The device according to anyone of the preceding claims, wherein the metal-organic framework is present in the polymeric membrane in an amount ranging from 10 to 60% by weight.

6. The device according to anyone of the preceding claims, wherein said mixed matrix membrane is coated with a protective polymer selected from a perfluoropolymer and a polytetrafluoroethylene.

7. Process for the preparation of the device of any one of claims 1-6, comprising the following steps:
a) desolvation of the powder of said metal-organic framework of formula (I) at about 80° C placed under vacuum for a suitable time and subsequent suspension in suitable solvent;
b) preparation of a homogeneous solution of the polymer composing said polymeric membrane by dissolving a suitable percentage of the polymer powder in a suitable solvent and placing under stirring;
c) addition to the solution obtained in step b) of the suspension obtained in step a) in a suitable amount to reach the desired final concentration of metal-organic framework on the total polymer + metal-organic framework;
d) sonication;
e) agitation for a suitable time;
f) casting of the solution on an appropriate support so as to obtain a spread solution with a suitable thickness;
g) exposition of the solution to the air for a suitable period between 10 seconds and 10 minutes;
h) immersion of the polymeric solution spread on the support in a coagulation bath with suitable non-solvent.

8. Use of the device of anyone of claims 1-6 for the decontamination of polluted waters from mercury and/or cadmium.

9. The use according to claim 8 wherein the waters are polluted by traces of contaminant and they are decontaminated until they are potable.

10. A process for the decontamination of waters comprising the following steps:
a) contact between contaminated water and the device of claims 1-6;
b) removal of the device from the water;
c) washing of the device with suitable solvent, for example 2-mercaptoethanol or dimethyl sulfide in admixture with water;
d) desorption of the contaminant bound to the device with suitable solvent, for example 2-mercaptoethanol or dimethyl sulfide in admixture with water for a suitable time;
e) optional storage of the contaminant.

11. The process according to claim 10 wherein the water to be decontaminated is a water flow.

12. The process according to claim 10 or 11 wherein said water to be decontaminated is water containing up to 1 ppm of Hg²⁺ and it is decontaminated up to a maximum mercury value of 1.6 ppb.

## Patentansprüche

1. Vorrichtung mit einer Mischmatrixmembran, wobei die Mischmatrixmembran eine Polymermembran ist, in der zumindest ein metallorganisches Gerüst (MOF) mit der folgenden Formel (I) dispergiert ist:
- {X"Cu"₆[(S,S)-bis[(S)-methylcysteine]oxalyl diamid]₃(OH)₂(Y)} ·n H₂O;
- wobei X aus Ca", Ba" und Sr" ausgewählt wird,
- Y aus H₂O und CH₃OH ausgewählt wird,
- und n zwischen 0 und 35 liegt,
- und wobei das Polymer der Polymermembran aus Polyimid und Polyethersulfon ausgewählt wird.

2. Vorichtung nach Anspruch 1, wobei die Polymermembran eine Polyimidmembran ist, insbesondere die Membran mit der Bezeichnung Matrimid^{®}.

3. Vorichtung nach einem der vorhergehenden Ansprüche, wobei X Ca" und Y H₂O ist.

4. Vorrichtung nach einem der Ansprüche 1 bis 3, wobei das metallorganische Gerüst die Formel {Ca"Cu"₆[(S,S)-bis[(S)-methylcystein]oxalyl diamid]₃(OH)₂(H₂O)} · n H₂O aufweist, wobei n zwischen 0 und 35 liegt.

5. Vorrichtung nach einem der vorhergehenden Ansprüche, wobei das metallorganische Gerüst in der Polymermembran in einer Menge im Bereich von 10 bis 60 Gewichtsprozent vorhanden ist.

6. Vorrichtung nach einem der vorhergehenden Ansprüche, wobei die Mischmatrixmembran mit einem Schutzpolymer beschichtet ist, das aus einem Perfluorpolymer und einem Polytetrafluorethylen ausgewählt wird.

7. Verfahren zur Herstellung der Vorrichtung nach einem der Ansprüche 1 bis 6, das die folgenden Schritte aufweist:
a) Desolvatisierung des Pulvers des metallorganischen Gerüsts der Formel (I) bei etwa 80°C unter Vakuum für eine geeignete Zeit und anschließende Suspension in einem geeigneten Lösungsmittel;
b) Herstellung einer homogenen Lösung des Polymers, aus dem die Polymermembran besteht, durch Auflösen eines geeigneten Anteils des Polymerpulvers in einem geeigneten Lösungsmittel und unter Rühren;
c) Zugabe der in Schritt a) erhaltenen Suspension zu der in Schritt b) erhaltenen Lösung in einer geeigneten Menge, um die gewünschte Endkonzentration des metallorganischen Gerüsts bezogen auf das Gesamtgemisch aus Polymer und metallorganischem Gerüst zu erreichen;
d) Ultraschallbehandlung;
e) Rühren für eine geeignete Zeit;
f) Auftragen der Lösung auf einen geeigneten Träger, um eine Lösungsverteilung mit geeigneter Dicke zu erhalten;
g) Trocknen der Lösung an der Luft für einen geeigneten Zeitraum zwischen 10 Sekunden und 10 Minuten;
h) Eintauchen der auf dem Träger verteilten Polymerlösung in ein Koagulationsbad mit geeignetem Nichtlösungsmittel.

8. Verwendung der Vorrichtung nach einem der Ansprüche 1 bis 6 zur Dekontamination von mit Quecksilber und/oder Cadmium verunreinigtem Wasser.

9. Verwendung nach Anspruch 8, wobei das Wasser mit Spuren von Schadstoffen verunreinigt ist und bis zur Trinkwasserqualität dekontaminiert wird.

10. Verfahren zur Dekontamination von Wasser, das die folgenden Schritte aufweist:
a) Kontakt zwischen kontaminiertem Wasser und der Vorrichtung nach den Ansprüchen 1 bis 6;
b) Entnahme der Vorrichtung aus dem Wasser;
c) Waschen der Vorrichtung mit einem geeigneten Lösungsmittel, beispielsweise 2-Mercaptoethanol oder Dimethylsulfid im Gemisch mit Wasser;
d) Desorption des an die Vorrichtung gebundenen Schadstoffs mit einem geeigneten Lösungsmittel, beispielsweise 2-Mercaptoethanol oder Dimethylsulfid im Gemisch mit Wasser, über einen geeigneten Zeitraum;
e) optionale Lagerung des Schadstoffs.

11. Verfahren nach Anspruch 10, wobei das zu dekontaminierende Wasser ein Wasserstrom ist.

12. Verfahren nach Anspruch 10 oder 11, wobei das zu dekontaminierende Wasser Wasser ist, das bis zu 1 ppm Hg²⁺ enthält und bis zu einem maximalen Quecksilberwert von 1,6 ppb dekontaminiert wird.

## Revendications

1. Dispositif comprenant une membrane à matrice mixte dans lequel ladite membrane à matrice mixte est une membrane polymère dans laquelle est dispersée au moins une structure organométallique (MOF) ayant la formule suivante (I) :
{X^{II}Cu^{II}₆[(S,S)-bis[(S)-méthylcystéine]oxalyl diamide]₃(OH)₂(Y)}. n H₂O;
dans lequel X est choisi parmi Ca^{II}, Ba^{II} et Sr^{II},
Y est choisi entre H₂O et CH₃OH,
et n est compris entre 0 et 35,
et dans lequel le polymère de ladite membrane polymère est choisi parmi le polyimide, le polyéthersulfone.

2. Dispositif selon la revendication 1, dans lequel ladite membrane polymère est une membrane polyimide, en particulier la membrane appelée Matrimid^{®}.

3. Dispositif selon l'une quelconque des revendications précédentes, dans lequel X est Ca^{II} et Y est H₂O.

4. Dispositif selon l'une quelconque des revendications 1 à 3, dans lequel ladite structure organométallique a pour formule {Ca^{II}Cu^{II}₆[(S,S)-bis[(S)-méthylcystéine]oxalyl diamide]₃(OH)₂(H₂O)}. n H₂O, dans lequel n est compris entre 0 et 35.

5. Dispositif selon l'une quelconque des revendications précédentes, dans lequel la structure organométallique est présente dans la membrane polymère dans une proportion allant de 10 à 60 % en poids.

6. Dispositif selon l'une quelconque des revendications précédentes, dans lequel ladite membrane à matrice mixte est recouverte d'un polymère protecteur choisi parmi un perfluoropolymère et un polytétrafluoroéthylène.

7. Procédé de préparation du dispositif selon l'une quelconque des revendications 1 à 6, comprenant les étapes suivantes :
a) désolvatation de la poudre de ladite structure organométallique de formule (I) à environ 80°C placée sous vide pendant une durée appropriée et suspension ultérieure dans un solvant approprié ;
b) préparation d'une solution homogène du polymère composant ladite membrane polymère en dissolvant un pourcentage approprié de la poudre de polymère dans un solvant approprié et en la plaçant sous agitation ;
c) ajout à la solution obtenue à l'étape b) de la suspension obtenue à l'étape a) en quantité appropriée pour atteindre la concentration finale souhaitée de la structure organométallique par rapport au total polymère + structure organométallique ;
d) sonication ;
e) agitation pendant une durée appropriée ;
f) coulée de la solution sur un support approprié de manière à obtenir une solution étalée d'une épaisseur appropriée ;
g) exposition de la solution à l'air pendant une période appropriée comprise entre 10 secondes et 10 minutes ;
h) immersion de la solution polymère étalée sur le support dans un bain de coagulation avec un non-solvant approprié.

8. Utilisation du dispositif selon l'une quelconque des revendications 1 à 6 pour la décontamination des eaux polluées par le mercure et/ou le cadmium.

9. Utilisation selon la revendication 8 dans laquelle les eaux sont polluées par des traces de contaminant et sont décontaminées jusqu'à ce qu'elles soient potables.

10. Procédé de décontamination des eaux comprenant les étapes suivantes :
a) contact entre l'eau contaminée et le dispositif des revendications 1 à 6 ;
b) retrait du dispositif de l'eau ;
c) lavage du dispositif avec un solvant approprié, par exemple du 2-mercaptoéthanol ou du sulfure de diméthyle mélangé à de l'eau ;
d) désorption du contaminant lié au dispositif à l'aide d'un solvant approprié, par exemple du 2-mercaptoéthanol ou du sulfure de diméthyle mélangé à de l'eau pendant une durée appropriée ;
e) stockage facultatif du contaminant.

11. Procédé selon la revendication 10, dans lequel l'eau à décontaminer est un flux d'eau.

12. Procédé selon la revendication 10 ou 11, dans lequel l'eau à décontaminer est de l'eau contenant jusqu'à 1 ppm de Hg²⁺ et est décontaminée jusqu'à une valeur maximale de mercure de 1,6 ppb.
